# EUROPÄISCHE PATENTSCHRIFT

(11) **EP 0 550 901 B1**
(45) Veröffentlichungstag und Bekanntmachung des Hinweises auf die Patenterteilung: **05.06.1996**
(21) Anmeldenummer: 92122056.2
(22) Anmeldetag: 28.12.1992
(51) Int. Cl.: C08G 18/10, C08G 18/48, C08G 18/80, C08G 18/76

(54) **Flüssige, helle Polyisocyanatgemische, ein Verfahren zu ihrer Herstellung und ihre Verwendung bei der Herstellung von hellen, harten Polyurethan-Schaumstoffen**
Liquid, low-colour polyisocyanate compositions, process for their preparation and their use in the production of low-colour rigid polyurethane foams
Compositions liquides de polyisocyanates à faible coloration, leur procédé de préparation et leur utilisation dans la fabrication de mousses rigides de polyuréthane à faible coloration

(30) Priorität: 07.01.1992 DE 4200157
(43) Veröffentlichungstag der Anmeldung: 14.07.1993
(73) Patentinhaber: BAYER AG, 51368 Leverkusen (DE)
(72) Erfinder: Gebauer, Herbert, Dr., W-4150 Krefeld 11 (DE); Gupta, Pramod, Dr., W-5012 Bedburg (DE); Hoppe, Martin, Dr., W-5090 Leverkusen (DE); Wiedermann, Rolf, Dr., W-5068 Odenthal-Voiswinkel (DE)

(56) Entgegenhaltungen:
- EP-A- 0 320 134
- EP-A- 0 344 551
- EP-A- 0 415 159
- CHEMICAL ABSTRACTS, vol. 109, no. 8, August 1988, Columbus, Ohio, US; abstract no. 55878s,
- CHEMICAL ABSTRACTS, vol. 100, no. 18 Columbus, Ohio, US; abstract no. 140234n ; & JP-A-58 154 714
- CHEMICAL ABSTRACTS, vol. 115, no. 18 Columbus, Ohio, US; abstract no. 184944h ; & JP-A-3 084 022

## Beschreibung

Die Erfindung betrifft neue, helle, urethanmodifizierte Polyisocynate oder Polyisocyanatgemische der Diphenylmethanreihe, ein Verfahren zu ihrer Herstellung durch Umsetzung von zweikernreichen Polyisocyanaten oder Polyisocyanatgemischen der Diphenylmethanreihe mit hochfunktionellen Polyetherpolyolen und gegebenenfalls anschließende Abmischung dieser modifizierten Produkte mit Polyisocyanaten oder Polyisocyanatgemischen der Diphenylmethanreihe und die Verwendung der modifizierten Polyisocyanatgemische bei der Herstellung von hellen zähen und harten Polyurethan-Schaumstoffen.

Zur Herstellung von Polyurethanschaumstoffen, insbesondere von Polyurethan-Hartschaumstoffen, verwendet man seit langen Jahren als Polyisocyanatkomponente Polyisocyanate bzw. Polyisocyanatgemische der Diphenylmethanreihe (MDI). Für die Herstellung von harten Polyurethanschaumstoffen verwendet man vorzugsweise Polyisocyanatgemische der Diphenylmethanreihe, die eine durchschnittliche NCO-Funktionalität von ca. 2 bis 3,1 aufweisen. Diese haben jedoch den Nachteil, daß sie zur Herstellung von hellen Polyurethan-Schaumstoffen ungeeignet sind.

Der Begriff "Polyisocyanat der Diphenylmethanreihe" stellt den Oberbegriff für alle Di- und Polyisocyanate dar, die bei der Phosgenierung von Anilin/Formaldehyd-Kondensaten entstehen und in den Phosgenierungsprodukten als Gemisch vorliegen.

Der Begriff "Polyisocyanatgemisch der Diphenylmethanreihe" umfaßt beliebige Gemische von "Polyisocyanaten der Diphenylmethanreihe", d.h. sowohl die genannten Phosgenierungsprodukte von Anilin/Formaldehyd-Kondensaten als auch solche Gemische, wie sie durch Abmischung einzelner "Polyisocyanate der Diphenylmethanreihe" und/oder unterschiedlicher Mischungen hiervon entstehen, als auch solche Gemische von "Polyisocyanaten der Diphenylmethanreihe" wie sie durch partielle Destillation von Phosgenierungsprodukten von Anilin/Formaldehyd-Kondensaten als Destillat bzw. Destillationsrückstand anfallen.

Destillierte MDI-Typen, d.h. Fraktionen mit hohem Gehalt an Zweikemprodukten (4,4' isomeres MDI) bzw. solche mit möglichst niedrigem Gehalt an mehrkernigen Isocyanaten wären prinzipiell ebenfalls für die Herstellung von hellen Polyurethan-Schaumstoffen einsetzbar, soweit die Helligkeit der Schaumstoffe betroffen ist, da die mehrkernigen Isocyanate der MDI-Reihe sowie auch Isocyanate mit noch höheren Molekulargewichten die Schaumstoffe gelblich verfärben. Farbprobleme im MDI-Polymer auf Basis von Polyisocyanaten der MDI-Reihe sind aus der Literatur bekannt. Daher waren bisher helle Schaumstoffe auf Basis von Polyisocyanaten der MDI-Reihe nur schwer zugänglich, wie aus GB 2 207 671, US 4 465 639 oder US 4 876 380 bekannt. Außerdem weisen hoch zweikernhaltige Isocyanate der MDI-Reihe leider eine zu hohe Reaktivität und eine zu niedrige Funktionalität (Fehlen der Mehrkernanteile) auf, so daß Polyurethan-Hartschaumstoffe großen Volumens mit genügender Dimensionsstabilität nicht hergestellt werden können. Die Verwendung von zweikernhaltigen Isocyanaten mit höherem Anteil an 2,4'- und 2,2'-Isomeren, die eine geeignete Reaktivität aufweisen, scheidet ebenfalls aufgrund einer zu niedrigen Funktionalität aus. Die daraus hergestellten Hartschaumstoffe zeigen Schrumpferscheinungen, die eine Anwendung ausschließen.

Helle PUR-Schaumstoffe werden überall dort verlangt, wo durchschneidende Deckschichten zusammen mit dem Schaumstoff appliziert werden, z.B. Container oder Fahrzeugaufbauten mit Polyesterdeckschichten, Surfboards oder Kühlschränke mit Kunststoffinnenbehältern.

Aus der Literatur ist bekannt, daß für Anwendungen im Bereich der durchscheinenden Deckschichten Prepolymere auf Basis Toluylendiisocyanat, sogenannte TDI-Prepolymere eingesetzt werden, die die Herstellung weißer, harter Schaumstoffe gestatten. Allerdings wird die Verwendung von Prepolymeren auf Basis von Toluylendiisocyanat (TDI-Prepolymere) zunehmend durch gewerbehygienische Auflagen erschwert.

Aufgabe war es daher, Prepolymere zur Verfügung zu stellen, die es gestatten, helle, dimensionsstabile Polyurethan-Hartschaumstoffe unter gewerbehygienischen und ökologischen Gesichtspunkten herzustellen.

Diese Aufgabe konnte mit den erfindungsgemäßen Prepolymeren gelöst werden.

Gegenstand der Erfindung sind urethangruppenhaltige Polyisocyanate oder Polyisocyanatgemische der Diphenylmethanreihe, die dadurch gekennzeichnet sind, daß sie Prepolymere darstellen, die aus
a) Isocyanaten der Diphenylmethanreihe mit einem Anteil an 75-95 Gew.-% Zweikernisomeren, wobei der Anteil an 2,4'-Isomeren 15-40 Gew.-% und an 2,2'-Isomeren 2-10 Gew.-% beträgt, und einem Anteil an 5-25 Gew.-% polymeren Isocyanaten der Diphenylmethanreihe und
b) Polyetherpolyolen der Funktionalität 3-8 mit einer OH-Zahl von 350-1000 mg KOH/g
bestehen.

Die erfindungsgemäßen Prepolymere werden für die Herstellung von dimensionsstabilen, hellen und zähen Polyurethan-Hartschaumstoffen verwendet.

Bei der Herstellung von dimensionsstabilen, hellen und zähen Polyurethan-Hartschaumstoffen werden zum Schäumen entweder halogenhaltige Treibmittel wie Trichlorfluormethan, Chlordifluormethan, 1,1-Dichlor-1-fluorethan, 1-Chlor-1,1-difluorethan, 1,1-Dichlor-2,2,2-trifluorethan oder Gemische daraus oder halogenfreie Treibmittel wie C₄- bis C₈-Alkane, vornehmlich C₅-Alkane oder Kohlendioxid eingesetzt.

Ein weiterer Gegenstand der Erfindung ist ein Verfahren zur Herstellung von urethangruppenhaltigen Polyisocyanaten oder Polyisocyanatgemischen der Diphenylmethanreihe, welches dadurch gekennzeichnet ist, daß
a) Isocyanate der Diphenylmethanreihe mit einem Anteil an 75-95 Gew.-% Zweikernisomeren, wobei der Anteil an 2,4'-Isomeren 15-40 Gew.-% sind an 2,2'-Isomeren 2-10 Gew.-% beträgt, und mit einem Anteil an 5-25 Gew.-% polymeren Isocyanaten der Diphenylmethanreihe mit
b) 0,1-10 Gew.-%, bezogen auf die Gesamtmenge, Polyetherpolyole der Furktionalität 3-8 mit einer OH-Zahl von 350-1000 mg KOH/g und einem Molekulargewicht von 150-1000
umgesetzt werden.

Bevorzugt werden 6-8 Gew.-%, bezogen auf die Gesamtmenge, Polyetherpolyol eingesetzt.

Die Isocyanate der Diphenylmethanreihe, die bei der Umsetzung eingesetzt werden, weisen vorzugsweise, einen 85 Gew.-%igen Anteil an Zweikernisomeren auf, wobei der Anteil an 2,4'-Isomeren 20-24 Gew.-% und der Anteil an 2,2'-Isomeren 1-5 Gew.-% beträgt.

Bei der Durchführung des erfindungsgemäßen Verfahrens wird vorzugsweise die Polyisocyanat-Komponente vorgelegt und das Polyetherpolyol unter Rühren zugegeben. Vorzugsweise wird in Gegenwart einer Inertgasatmosphäre gearbeitet.

Das erfindungsgemäße Verfahren wird im allgemeinen zwischen 40 und 140°C, vorzugsweise im Temperaturbereich von 40 bis 80°C, durchgeführt.

Die Reaktion kann auch kontinuierlich durch Zudosierung der Polyetherpolyolkomponente zu einem Polyisocyanatstrom durchgeführt werden.

Das durch das erfindungsgemäße Verfahren erhaltene Reaktionsgemisch kann anschließend mit weiteren nichtmodifizierten Polyisocyanaten oder Polyisocyanatgemischen der Diphenylmethanreihe abgemischt werden. Die zur Abmischung verwendete zweite Polyisocyanat-Komponente kann mit dem erfindungsgemäßen urethangruppenhaltigen Polyisocyanat identisch sein.

Die Erfindung soll anhand der nachfolgenden Beispiele näher erläutert werden.

Die Herstellung der Polyetherpolyole erfolgt nach bekannten Verfahren. Hierbei werden die erforderlichen Mengen an Starter (z.B. Glycerin, Pentaerythrit, Sorbit, Saccharose oder Gemische) vorgelegt. Anschließend werden unter Verwendung üblicher Basen (z.B. NaOH oder KOH) die Epoxide bei 100-120°C zugegeben. Das Produkt wird neutralisiert und nach bekannten Verfahren aufgearbeitet.

Für die nachfolgenden Beispiele werden die Polyetherpolyole A-E eingesetzt, die in Tabelle 1 näher beschrieben sind:
- Polyetherpolyol A:: hergestellt durch Propoxylierung von Trimethylolpropan (TMP) unter Verwendung von je 0,33 Mol, Propylenoxid pro reaktives Wasserstoffatom des Starters.
- Polyetherpolyol B:: hergestellt durch Propoxylierung von Sorbit unter Verwendung von je 1,624 Mol Propylenoxid pro reaktives Wasserstoffatom des Starters
- Polyetherpolyol C:: hergestellt durch Propoxylierung von Pentaerythrit unter Verwendung von je 1,172 Mol Propylenoxid pro reaktives Wasserstoffatom des Starters
- Polyetherpolyol D:: hergestellt durch Propoxylierung von Trimethylolpropan unter Verwendung von je 1,796 Mol Propylenoxid pro reaktives Wasserstoffatom des Starters
- Polyetherpolyol E:: hergestellt durch Propoxylierung von Sorbit unter Verwendung von je 0,987 Mol Propylenoxid und 0,325 Mol Ethylenoxid pro reaktives Wasserstoffatom des Starters

**Tabelle 1**

| | Polyetherpolyol A | Polyetherpolyol B | Polyetherpolyol C | Polyetherpolyol D | Polyetherpolyol E |
|---|---|---|---|---|---|
| Starter | TMP | Sorbit | Pentaerythrit | TMP | Sorbit |
| OH-Zahl (mg KOH/g) | 880 | 450 | 550 | 380 | 522 |
| Wassergehalt (Gew.-%) | 0,08 | 0,04 | 0,10 | 0,15 | 0,04 |
| mittlere Funktionalität | 3 | 6 | 4 | 3 | 6 |
| mittleres Molgewicht | 191 | 748 | 408 | 443 | 645 |

In den Beispielen wurden die Polyisocyanate 1 bis 3 folgender Zusammensetzung verwendet:

### Polyisocyanat 1

Rohes, undestilliertes Phosgenierungsprodukt eines gemäß DE-OS 2 356 828 hergestellten Polyamingemisches der Diphenylmethanreihe mit einem Gehalt von 85 Gew.-% an Diaminodiphenylmethan-Isomeren, wovon ca. 60 Gew.-% 4,4'-Diaminodiphenylmethan (MDA), ca 22 Gew.-% 2,4'-Diaminodiphenylmethan (MDA) und ca. 3 Gew.-% 2,2'-Diaminodiphenylmethan (MDA) sind. Das Polyisocyanatgemisch enthält dementsprechend 85 Gew.-% Diisocyanatodiphenylmethan-Isomere und 15 Gew.-% höherkernige Polyisocyanate der Diphenylmethanreihe und hat eine Viskosität von ca. 25 mPas bei 25°C.

### Polyisocyanat 2

Polyisocyanatgemisch der Diphenylmethanreihe mit einem Gehalt an Diisocyanatodiphenylmethan-Isomeren (MDI) von ca. 90 Gew.-%, wovon 50 Gew.-% 4,4'-MDI; 37 Gew.-% 2,4'-MDI und 8 Gew.-% 2,2'-MDI sind und mit ca. 10 Gew.-% höherfunktionellen polymeren Polyisocyanaten der Diphenylmethanreihe und mit einer Viskosität von ca. 25 mPas bei 25°C.

### Polyisocyanat 3

Handelsware: reines, destilliertes 4,4'-Diphenylmethandiisocyanat, wie z.B. Desmodur 44 M® der Firma Bayer AG.

### Beispiel 1:

In einem mit Rührer, Tropftrichter, Thermometer, Stickstoffzuleitung und -ableitung versehenen Dreihalskolben werden 466 g Polyisocyanat 1 eingefüllt. Unter Rühren und unter Stickstoffatmosphäre werden anschließend bei 60°C während eines Zeitraums von 3 Stunden 34 g Polyetherpolyol A zugetropft. Danach wird unter weiterem Rühren das Umsetzungsprodukt eine Stunde bei 60°C gehalten und danach auf Raumtemperatur abgekühlt.

### Beispiel 2:

Entsprechend Beispiel 1 werden 450 g Polyisocyanat 1 mit 50 g Polyetherpolyol E umgesetzt.

### Beispiel 3:

Entsprechend Beispiel 1 werden 460 g Polyisocyanat 2 mit 40 g Polyetherpolyol C umgesetzt.

### Beispiel 4:

Entsprechend Beispiel 1 werden 450 g Polyisocyanat 1 mit 50 g Polyetherpolyol B umgesetzt.

### Beispiel 5:

Entsprechend Beispiel 1 werden 466 g Isocyanat 3 mit 34 g Polyetherpolyol A umgesetzt. Hierbei kann es zu einer Phasentrennung bzw. Kristallisation kommen.

Die Daten der erhaltenen Umsetzungsprodukte aus den Beispielen 1 bis 5 sind in Tabelle 2 aufgelistet.

**Tabelle 2**

| | Viskosität [mPas] bei 25°C | NCO-Gehalt (%) |
|---|---|---|
| Beispiel 1 | 1 200 | 26,50 |
| Beispiel 2 | 2 300 | 25,60 |
| Beispiel 3 | 850 | 23,50 |
| Beispiel 4 | 1880 | 25,55 |
| Beispiel 5 | 233 | 26,68 |

Die gemäß Beispiel 1 bis 5 erhaltenen Prepolymere sowie Polyisocyanat 1 und Desmodur PF® werden zur Herstellung von Hartschaumstoffprüfkörpern (Schaumstoffproben 1 bis 10) eingesetzt.

Als Polyolkomponenten werden beim Vorschäumen folgende Formulierungen eingesetzt:

### Formulierung A:

Polyolgemisch mit einer der OH-Zahl von 540 mg KOH/g und einer Viskosität von 1 520 mPa.s bei 25°C bestehend aus:
1) 98 Gew.-Tle eines Polyetherpolyols der OH-Zahl 550 mg KOH/g, der durch Umsetzung von Trimethylolpropan mit Ethylenoxid und Propylenoxid erhalten wurde,
2) 1,5 Gew.-Tle. eines polyetherpolyolmodifizierten Polysiloxans als Schaumstabilisator und
3) 0,5 Gew.-Tle. Wasser als Treibmittel

### Formulierung B:

Polyolgemisch mit einer OH-Zahl von 580 mg KOH/g und einer Viskosität von 1 780 mPa.s bei 20°C bestehend aus:
1) 100 Gew.-Tle Formulierung A
2) 12 Gew.-Tle Polyetherpolyol A.

Zur Herstellung der Schaumstoffprüfkörper werden
100 Gew.-Teile Formulierung A bzw. 112 Gew.-Teile Formulierung B, 1,4 bis 2,0 Gew.-Teile N,N'-Dimethylcyclohexylamin als Katalysator, 18 bis 38 Gew.-Teile Treibmittel sowie 163 bis 187 Gew.-Teile der Prepolymeren aus den Beispielen 1 bis 5 bzw. Polyisocyanat 1 bzw. Desmodur PF® abgemischt und zum Prüfkörper verarbeitet.

Im Labor wurden diese Prüfkörper in bekannter Weise bei 23°C mit den Maßen 200 mm x 200 mm x ca. 200 mm hergestellt (Entformung nach etwa 15 min.). Nach 24 Stunden wurden die Prüfkörper vertikal in der Mitte aufgeschnitten. Ermittelt wird die kleinste horizontale Weite, um das Ausmaß an Schrumpfung bei Raumtemperatur festzustellen (siehe Tabelle 3).

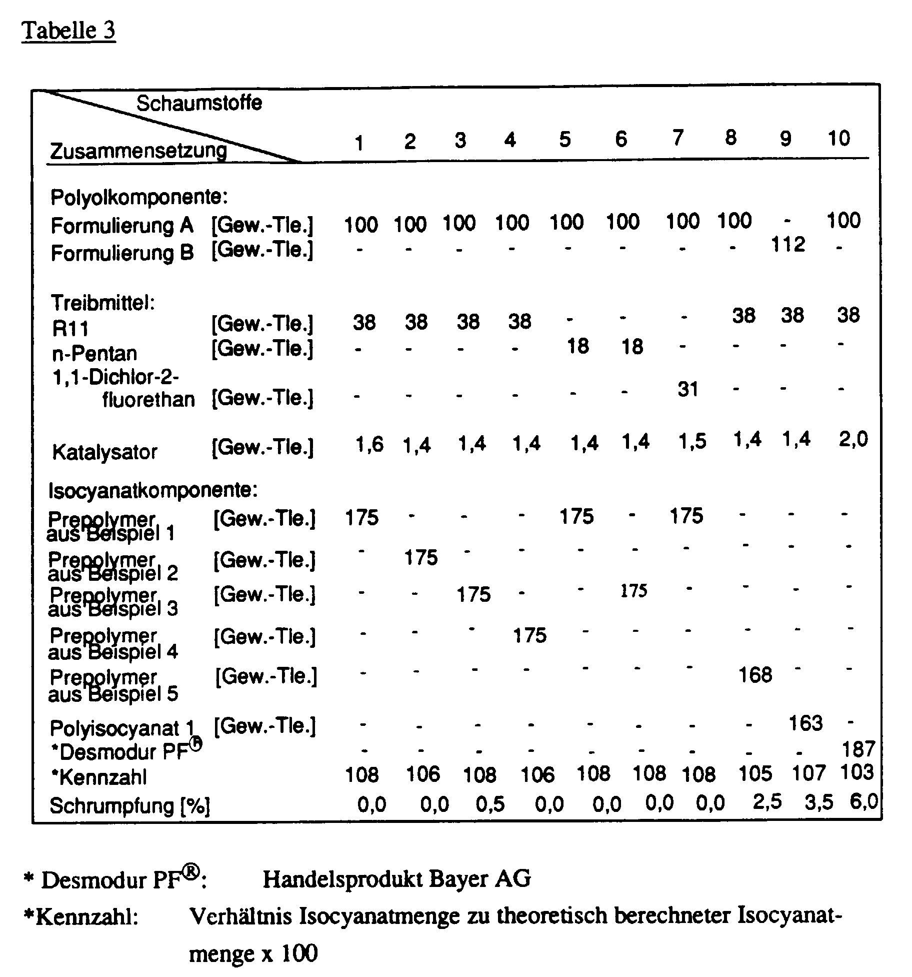

Die Versuchsergebnisse der Herstellung von Polyurethan-Hartschaumstoffen mittels der Prepolymeren der Beispiele 1-5, des Polyisocyanats 1 und Desmodur PF® (Fa. Bayer) sind in Tabelle 3 zusammengestellt.

Wie der Tabelle zu entnehmen ist, zeigen die Schaumstoffe 8, 9 und 10 (Vergleichsbeispiele) bereits bei Raumtemperatur deutliche Schrumpfungen. Als Isocyanatkomponenten sind Diphenylmethan-4,4'-diisocyanat (Polyisocyanat 1), Desmodur PF® (urethangruppenhaltiges Diphenylmethandiisocyanat; Bayer AG; Stand der Technik) sowie ein mit einem erfindungsgemäßen Polyetherpolyol umgesetztes, destilliertes Diphenylmethan-4,4'-diisocyanat nicht geeignet, da sie zwar helle, jedoch nicht dimensionsstabile Polyurethan-Hartschaumstoffe liefern.

Darüber hinaus zeigen die Ergebnisse bezüglich Schaumstoff 1 und Schaumstoff 9, daß die Polyetherpolyole auf der Isocyanatseite zur Herstellung der erfindungsgemäßen Prepolymeren eingesetzt werden müssen, damit helle Schaumstoffe, die nicht schrumpfen, erhalten werden (Schaumstoff 1). Wird das Polyetherpolyol auf der Polyolseite eingesetzt, so erhält man Schaumstoffe, die schrumpfen (Schaumstoff 9).

Die Verschäumung der Umsetzungsprodukte aus Formulierung A und den Prepolymeren aus den Beispielen 1-4 führt demgegenüber zu dimensionsstabilen und hellen Polyurethan-Hartschaumstoffen 1-7.

## Patentansprüche

1. Urethangruppenhaltige Polyisocyanate oder Polyisocyanatgemische der Diphenylmethanreihe, dadurch gekennzeichnet, daß die urethangruppenhaltigen Polyisocyanate oder Polyisocyanatgemische als Prepolymere aus
a) Isocyanaten der Diphenylmethanreihe mit einem 75-95 Gew.-%igen Anteil an Zweikernisomeren, wobei der Anteil an 2,4'-Isomeren 15-40 Gew.-% und an 2,2'-Isomeren 2-10 Gew.-% beträgt, und einen Anteil von 5-25 Gew.-% an polymeren Isocyanaten der Diphenylmethanreihe und
b) Polyetherpolyolen einer Funktionalität von 3-8 mit einer OH-Zahl von 350-1000 mg KOH/g und einem Molekulargewicht von 150-1000
bestehen.

2. Urethangruppenhaltige Polyisocyanate oder Polyisocyanatgemische der Diphenylmethanreihe gemäß Anspruch 1, dadurch gekennzeichnet, daß den Prepolymeren Polyisocyanate oder Polyisocyanatgemische der Diphenylmethanreihe beigemischt werden.

3. Verfahren zur Herstellung von urethangruppenhaltigen Polyisocyanaten oder Polyisocyanatgemischen der Diphenylmethanreihe, dadurch gekennzeichnet, daß
a) Isocyanate der Diphenylmethanreihe mit einem Anteil an 75 bis 95 Gew.-% Zweikernisomeren, wobei der Anteil an 2,4'-Isomeren 15-40 Gew.-% und an 2,2'-Isomeren 2-10 Gew.-% beträgt, und mit einem Anteil an 5-25 Gew.-% polymeren Isocyanaten der Diphenylmethanreihe mit
b) 0,1-10 Gew.-%, bezogen auf die Gesamtmenge, Polyetherpolyolen der Funktionalität 3-8 mit einer OH-Zahl von 350-1 000 mg KOH/g und einem Molekulargewicht von 150 bis 1 000 umgesetzt werden.

4. Verfahren nach Anspruch 3, dadurch gekennzeichnet, daß die Umsetzung mit 6-8 Gew.-% Polyetherpolyolen durchgeführt wird.

5. Verfahren nach Anspruch 3, dadurch gekennzeichnet, daß Isocyanate der Diphenylmethanreihe mit 85 Gew.-% Zweikernanteil, wobei der Anteil an 2,4'-Isomeren 20-24 Gew.-% und an 2,2'-Isomeren 1-5 Gew.-% beträgt, eingesetzt werden.

6. Verwendung der urethangruppenhaltigen Polyisocyanate oder Polyisocyanatgemische der Diphenylmethanreihe gemäß Anspruch 1 oder 2 zur Herstellung von dimensionsstabilen, hellen und zähen Polyurethan-Hartschaumstoffen.

## Claims

1. Urethane-group-containing polyisocyanates or polyisocyanate mixtures of the diphenylmethane series, characterized in that the urethane-group-containing polyisocyanates or polyisocyanate mixtures are prepolymers from
a) isocyanates of the diphenylmethane series with a content of 75-95 wt% of binuclear isomers, the content of 2,4'-isomers being 15-40 wt% and that of 2,2'-isomers being 2-10 wt%, and a content of 5-25 wt% of polymeric isocyanates of the diphenylmethane series and
b) polyether polyols of functionality 3-8 with an OH number of 350-1000 mg KOH/g and a molecular weight of 150-1000.

2. Urethane-group-containing polyisocyanates or polyisocyanate mixtures of the diphenylmethane series according to Claim 1, characterized in that polyisocyanates or polyisocyanate mixtures of the diphenylmethane series are admixed with the prepolymers.

3. A process for the production of urethane-group-containing polyisocyanates or polyisocyanate mixtures of the diphenylmethane series, characterized in that
a) isocyanates of the diphenylmethane series with a content of 75-95 wt% of binuclear isomers, the content of 2,4'-isomers being 15-40 wt% and that of 2,2'-isomers being 2-10 wt%, and with a content of 5-25 wt% of polymeric isocyanates of the diphenylmethane series are reacted with
b) 0.1-10 wt%, relative to the total quantity, of polyether polyols of functionality 3-8 with an OH number of 350-1000 mg KOH/g and a molecular weight of 150-1000.

4. A process according to Claim 3, characterized in that the reaction is carried out with 6-8 wt% polyether polyols.

5. A process according to Claim 3, characterized in that isocyanates of the diphenylmethane series with a binuclear content of 85 wt% are used, the content of 2,4'-isomers being 20-24 wt% and that of 2,2'-isomers being 1-5 wt%.

6. The use of the urethane-group-containing polyisocyanates or polyisocyanate mixtures of the diphenylmethane series according to Claim 1 or 2 for the production of dimensionally stable, light-coloured and tough polyurethane rigid foams.

## Revendications

1. Polyisocyanates ou mélanges de polyisocyanates contenant des groupes uréthane, de la série des diphénylméthanes, caractérisés en ce que les polyisocyanates ou les mélanges de polyisocyanates contenant des groupes uréthane, comme prépolymères, sont constitués par
a) des isocyanates de la série des diphénylméthanes, possédant une fraction de 75-95% en poids d'isomères binucléaires, la fraction en isomères 2,4' s'élevant de 15 à 40% en poids et celle en isomères 2,2' s'élevant à 2-10% en poids, et une fraction de 5-25% en poids d'isocyanates polymères de la série des diphénylméthanes, et
b) des polyétherpolyols de fonctionnalité 3-8 possédant un indice OH de 350-1000 mg KOH/g et un poids moléculaire de 150-1000.

2. Polyisocyanates ou mélanges de polyisocyanates contenant des groupes uréthane, de la série des diphénylméthanes, selon la revendication 1, caractérisés en ce qu'on ajoute aux prépolymères, des polyisocyanates ou des mélanges de polyisocyanates de la série des diphénylméthanes.

3. Procédé pour la préparation de polyisocyanates ou de mélanges de polyisocyanates contenant des groupes uréthane, de la série des diphénylméthanes, caractérisé en ce qu'on fait réagir
a) des isocyanates de la série des diphénylméthanes, possédant une fraction de 75-95% en poids d'isomères binucléaires, la fraction en isomères 2,4' s'élevant à 15-40% en poids et celle en isomères 2,2' s'élevant à 2-10% en poids, et une fraction de 5-25% en poids d'isocyanates polymères de la série des diphénylméthanes, avec
b) 0,1-10% en poids, rapportés à la quantité totale, de polyétherpolyols de fonctionnalité 3-8 possédant un indice OH de 350-1000 mg KOH/g et un poids moléculaire de 150-1000.

4. Procédé selon la revendication 3, caractérisé en ce qu'on effectue la mise en réaction avec 6-8% en poids de polyétherpolyols.

5. Procédé selon la revendication 3, caractérisé en ce qu'on met en oeuvre des isocyanates de la série des diphénylméthanes possédant une fraction binucléaire de 85% en poids, la fraction en isomères 2,4' s'élevant à 20-24% en poids et celle en isomères 2,2' s'élevant à 1-5% en poids.

6. Utilisation des polyisocyanates ou des mélanges de polyisocyanates contenant des groupes uréthane, de la série des diphénylméthanes, selon la revendication 1 ou 2 pour la préparation de mousses dures de polyuréthanne résistant à la déformation, claires et tenaces.
